# EUROPEAN PATENT APPLICATION

(11) **EP 4 083 882 A1**
(43) Date of publication of application: **02.11.2022**
(21) Application number: 19957902.0
(22) Date of filing: 26.12.2019
(51) Int. Cl.: G06Q 10/08

(54) **LUGGAGE MANAGEMENT SYSTEM, LUGGAGE MANAGEMENT METHOD, LUGGAGE MANAGEMENT DEVICE, AND COMPUTER-READABLE RECORDING MEDIUM**

(71) Applicant: NEC Corporation, 108-8001 Tokyo (JP)
(72) Inventor: KITADA, Masato, Tokyo 108-8001 (JP); KAMEI, Akira, Tokyo 108-8001 (JP)
(74) Representative: Betten & Resch
(86) International application number: PCT/JP2019/051331
(87) International publication number: WO 2021/131004

(57) **Abstract**

A luggage management system 10 includes a specification unit 21 that specifies personal identification information for identifying a user 11 associated with first biometric information using the first biometric information that is acquired, an association unit 22 that associates the specified personal identification information with luggage identification information of luggage 15 and delivery destination information indicating the delivery destination 17 of which the business type is different from that of the delivery source 16, a creation unit 23 that creates delivery slip information that is to be used by the creation terminal 50 to create a delivery slip 14 to be attached to the luggage 15, based on the luggage identification information and the delivery destination information, a selection unit 24 that selects the luggage identification information associated with second biometric information using the second biometric information that is acquired, and an output information creation unit 25 that creates output information for outputting the selected luggage identification information to the output terminal 60.

## Description

### TECHNICAL FIELD

The present invention relates to a luggage management system, a luggage management method, and a luggage management apparatus, for managing luggage, and further relates to a computer readable recording medium that includes a program recorded thereon, a program that realizes the luggage management system, the luggage management method, and the luggage management apparatus.

### BACKGROUND ART

When a traveler, a person on a business trip, or the like is to collect a plurality of pieces of luggage at a delivery destination (a baggage room of an airport or the like), there are cases in which he/she cannot reliably collect the luggage. The reason being that the delivery procedure for luggage at a delivery source (e.g., an accommodation facility, a transport facility, a retail store) is complicated, and thus the luggage is not reliably delivered to the delivery destination due to a mistake made in the procedure.

Further, even if the luggage has arrived at the delivery destination, there are cases in which a traveler, a person on a business trip, or the like cannot reliably collect his/her luggage. The reason being that the pieces of luggage from various delivery sources arrive at a delivery destination, and thus staff cannot be aware of all of the pieces of luggage that are to be handed to the traveler, the person on a business trip, or the like. Further, the traveler, the person on a business trip, or the like may not be aware of the luggage that he/she is to collect, and thus there are cases in which luggage cannot be reliably collected.

As a related technology, Patent Document 1 discloses a purchase delivery management system that provides a service for delivering purchased articles. According to the purchase delivery management system of Patent Document 1, personal identification information associated with biometric information that is acquired using a store authentication device is specified, and the specified personal identification information and article information indicating articles purchased by a user are stored in a storage unit in association with each other. Further, the purchase delivery management system of Patent Document 1 specifies personal identification information associated with biometric information that is acquired using a purchase receipt authentication device, and specifies the article information corresponding to the specified personal identification information, based on the specified personal identification information. As a result, an article corresponding to the article information can be handed to the user.

### LIST OF RELATED ART DOCUMENTS

### PATENT DOCUMENT

Patent Document 1: Japanese Patent Laid-Open Application No. 2014-048838

### SUMMARY OF INVENTION

### TECHNICAL PROBLEMS

However, the purchase delivery management system disclosed in Patent Document 1 is for delivering articles purchased by a user at a shop in a shopping mall to a parking lot of the shopping mall. Accordingly, in Patent Document 1, a case in which luggage is delivered when the business type of the delivery source is different from that of the delivery destination is not envisioned. Here, "different business type" encompasses businesses of different operation organizations such as transport facilities, accommodation facilities, and retail stores.

An example of an object of the present invention is to provide a luggage management system, a luggage management method, and a luggage management apparatus that improve convenience of the delivery service to the user, and a computer-readable recording medium that includes a program recorded thereon, the program being for realizing the system, method, and apparatus.

### SOLUTION TO THE PROBLEMS

In order to achieve the above-described object, a luggage management system according to an aspect of the present invention includes:
a delivery source terminal provided at a delivery source;
a creation terminal configured to create a delivery slip to be attached to luggage;
a delivery destination terminal provided at a delivery destination of which the business type is different from that of the delivery source;
an output terminal configured to output output information; and
a computer configured to manage the luggage,
wherein the computer includes:
   a specification means for specifying personal identification information to identify a user associated with first biometric information by using the first biometric information that is acquired;
   an association means for associating the specified personal identification information with luggage identification information of the luggage and delivery destination information indicating the delivery destination;
   a creation means for creating delivery slip information that is to be used by a creation terminal to create the delivery slip, based on the luggage identification information and the delivery destination information;
   a selection means for selecting the luggage identification information associated with second biometric information by using the second biometric information that is acquired; and
   an output information creation means for creating output information for outputting the selected luggage identification information to the output terminal.

Further, in order to achieve the above-described object, a luggage management method according to an aspect of the present invention includes:
specifying personal identification information for identifying a user associated with first biometric information by using the first biometric information that is acquired;
associating the specified personal identification information with luggage identification information of the luggage and delivery destination information indicating the delivery destination of which the business type is different from that of a delivery source;
creating delivery slip information that is to be used by a creation terminal to create a delivery slip that is to be attached to the luggage, based on the luggage identification information and the delivery destination information;
selecting the luggage identification information associated with second biometric information by using the second biometric information that is acquired; and
creating output information for outputting the selected luggage identification information to an output terminal.

Further, in order to achieve the above-described object, a luggage management apparatus according to an aspect of the present invention includes:
a specification means for specifying personal identification information for identifying a user associated with first biometric information by using the first biometric information that is acquired;
an association means for associating the specified personal identification information with luggage identification information of luggage and delivery destination information indicating a delivery destination of which the business type is different from that of a delivery source;
a creation means for creating delivery slip information that is to be used by a creation terminal to create a delivery slip that is to be attached to the luggage, based on the luggage identification information and the delivery destination information;
a selection means for selecting the luggage identification information associated with second biometric information by using the second biometric information that is acquired; and
an output information creation means for creating output information for outputting the selected luggage identification information to an output terminal.

Further, in order to achieve the above-described object, a computer-readable recording medium that includes a program recorded thereon, a program in which a program according to an aspect of the present invention includes instructions that cause a computer to carry out:
specifying personal identification information for identifying a user associated with first biometric information by using the first biometric information that is acquired;
associating the specified personal identification information with luggage identification information of the luggage and delivery destination information indicating the delivery destination of which the business type is different from that of a delivery source;
creating delivery slip information that is to be used by a creation terminal to create a delivery slip that is to be attached to the luggage, based on the luggage identification information and the delivery destination information;
selecting the luggage identification information associated with second biometric information by using the second biometric information that is acquired; and
creating output information for outputting the selected luggage identification information to an output terminal.

Further, in order to achieve the above-described object, a luggage management system according to an aspect of the present invention includes:
a specification means for specifying personal identification information for identifying a user associated with first biometric information by using the first biometric information that is acquired at a delivery source;
an association means for associating the specified personal identification information with luggage identification information of luggage and delivery destination information indicating a delivery destination;
a creation means for creating delivery slip information for creating a delivery slip based on the luggage identification information and the delivery destination information;
a selection means for selecting the luggage identification information associated with second biometric information by using the second biometric information acquired at a delivery destination; and
an output information creation means for creating output information for outputting the selected luggage identification information to an output terminal.

### ADVANTAGEOUS EFFECTS OF THE INVENTION

As described above, according to the invention, convenience of a delivery service to a user can be improved.

### BRIEF DESCRIPTION OF THE DRAWINGS

FIG. 1 is a diagram for illustrating an example of a luggage management system.
FIG. 2 is a diagram for illustrating an example of a luggage management apparatus (server).
FIG. 3 is a diagram for illustrating an example of a data structure of registered information.
FIG. 4 is a diagram for illustrating an example of a luggage management system.
FIG. 5 is a diagram for illustrating an example of operations of a server when luggage is dropped off.
FIG. 6 is a diagram for illustrating an example of operations performed by a server when luggage is collected.
FIG. 7 is a diagram for illustrating an example of a computer that realizes a luggage management apparatus.

### EXAMPLE EMBODIMENT

### (Example embodiment)

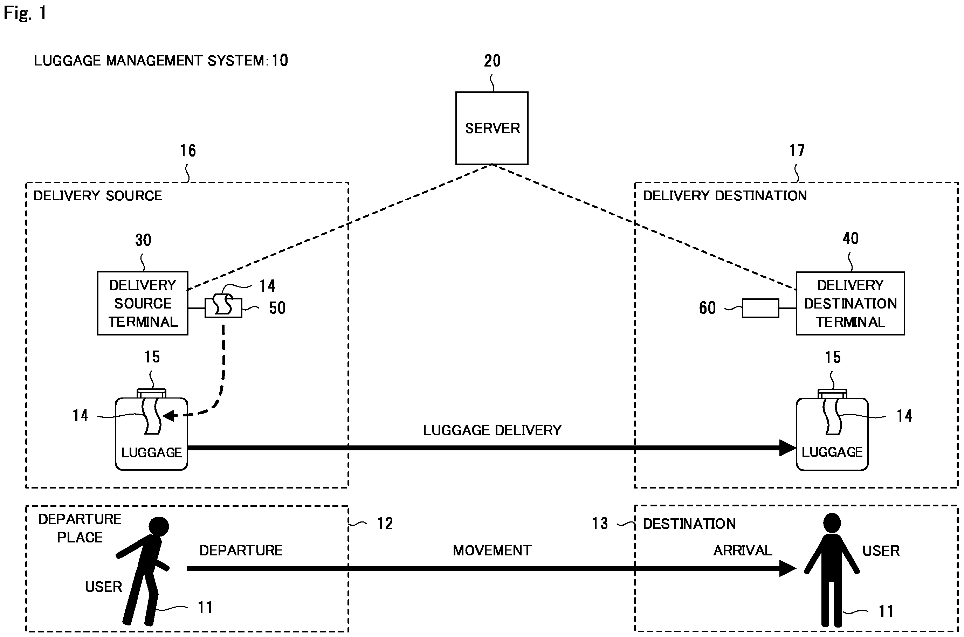

Hereinafter, an example embodiment of the invention will be described with reference to FIGS. 1 to 7.

### [System Configuration]

A luggage management system according to the present example embodiment will be described using FIG. 1. FIG. 1 is a diagram for illustrating an example of a luggage management system. FIG. 1 shows the configuration of a luggage management system 10, movement of a user 11 from a departure place 12 to a destination 13, and delivery of luggage 15 from a delivery source 16 to a delivery destination 17.

The movement of the user 11 is movement in which the user 11 leaves the departure place 12, then visits a sightseeing area, a business trip destination and the like, thereafter, arriving at the destination 13. Note that, the user 11 may directly move to the destination 13. The luggage 15 is delivered to the destination 13 where the user 11 is headed, using a moving vehicle such as an aircraft, a train, or an automobile, for example.

The luggage management system 10 is a system for improving convenience of the delivery service to the user. The delivery service according to the present example embodiment is a service with which, when the user 11 drops off one or more pieces of luggage 15 to the delivery source 16 before leaving the departure place 12, the user 11 can collect all of his/her delivered luggage 15 at the delivery destination 17 after the user 11 arrives at the destination 13.

The luggage 15 is, for example, luggage that the user 11 has made a delivery request for to a company that operates the delivery source 16. Specifically, the luggage 15 may include luggage belonging to the user 11 since before the departure, and articles and the like purchased by the user 11 at retail stores during the movement.

The delivery source 16 and the delivery destination 17 are windows where the delivery procedure of the luggage 15 is carried out, for example. The window where the delivery procedure is carried out is, for example, a window provided at a transportation facility, an accommodation facility, a retail store, a baggage room, or the like. A transportation facility may conceivably be, for example, a facility such as an airport, a station, and a bus stop. An accommodation facility may conceivably be, for example, a hotel, an inn, a guest house, public accommodation, a lodge, a holiday rental home, temple lodging, a net cafe, or the like. A retail store is a store that runs various kinds of retail business, or the like. Note that a baggage room may include an unattended delivery locker and the like.

Also, as shown in FIG. 1, the luggage management system 10 includes a server 20, a delivery source terminal 30, a delivery destination terminal 40, a creation terminal 50, and an output terminal 60.

The delivery source terminal 30 is a terminal apparatus provided at the delivery source 16. Specifically, the delivery source terminal 30 acquires biometric information regarding the user 11, and transmits the acquired biometric information to the server 20. The delivery source terminal 30 is, for example, an information processing apparatus such as a personal computer or a mobile computer that has an image capture device (e.g., a camera) for acquiring biometric information. Note that the image capture device need not necessarily be included in the information processing apparatus, and may also be provided separate from the information processing apparatus.

The biometric information is information such as a face image of the user 11, a feature amount of the face image, features of biological organs other than the face (e.g., a fingerprint, an iris, and veins), or information indicating features of behavior of the user 11. Also, two or more of the above types of information may be used as the biometric information.

The delivery destination terminal 40 is a terminal apparatus provided at the delivery destination 17 of which the business type is different from that of the delivery source 16. Specifically, the delivery destination 40 acquires the biometric information of the user 11 and transmits the acquired biometric information to the server 20. Note that the delivery destination terminal 40 is a terminal apparatus that has a similar configuration to that of the above delivery source terminal 30.

The creation terminal 50 is a terminal apparatus that is provided at the delivery source 16 and creates a delivery slip 14 to be attached to the luggage 15. Specifically, the creation terminal 50 acquires delivery slip information that is created in the server 20 and used for creating the delivery slip 14, from the server 20 via the delivery source terminal 30, and creates the delivery slip 14 using the acquired delivery slip information.

The delivery destination information includes information indicating the delivery destination 17 and information indicating the date and time of the arrival of the user 11 at the delivery destination 17. The information indicating the delivery destination 17 conceivably includes information indicating the name of the delivery destination, identification information for identifying the delivery destination, information indicating the address of the delivery destination, or two or more types of information of the above. The delivery slip information includes, at least the delivery destination information, luggage identification information, luggage quantity information indicating the quantity of the luggage, and the like.

The creation terminal 50 may also acquire the delivery slip information directly from the server 20 and create the delivery slip 14. Note that the creation terminal 50 is a printing apparatus for printing the delivery destination information, the luggage identification information, and the like on slip sheets (delivery sheets) and the like, for example.

The output terminal 60 is a terminal apparatus that is provided at the delivery destination 17 and outputs the luggage identification information. Specifically, the output terminal 60 acquires the luggage identification information selected in the server 20 from the server 20 via the delivery destination terminal 40, and outputs the luggage identification information to the output terminal 60 using the acquired luggage identification information.

The output terminal 60 is, for example, an image display device or the like that uses a liquid crystal, organic EL (Electro Luminescence), or a CRT (Cathode Ray Tube), for example. Further, the image display device may also include an audio output device such as a speaker. Further, the output terminal 60 may also be a printing apparatus.

When the user 11 carries out the delivery procedure (receipt and hand-over procedure) at the delivery source 16, first, the server 20 (luggage management apparatus) uses the biometric information (first biometric information) acquired at the delivery source to specify the personal identification information for identifying the user 11 associated with that biometric information. Next, the server 20 associates the specified personal identification information, the luggage identification information of the acquired luggage 15, and the delivery destination information indicating the delivery destination 17 with each other. Next, the server 20 creates the delivery slip information that is to be used by the creation terminal 50 to create the delivery slip 14, based on the luggage identification information and the delivery destination information.

The personal identification information is information for identifying the user 11 associated with the biometric information of the user 11, that is stored (registered) in advance in the server 20, or a storage device (not shown) provided outside of the server 20. In the example shown in FIG. 1, the server 20 specifies the personal identification information corresponding to the user 11 by acquiring the biometric information of the user 11 from the delivery source terminal 30 or the delivery destination terminal 40, and performing biometric authentication using the acquired biometric information.

The luggage identification information is information associated with the luggage 15 and used for identifying the luggage 15. The luggage identification information is associated with the personal identification information by the server 20, and stored in the storage device (not shown) provided in or outside of the server 20.

Thereafter, a staff member at the delivery source 16 attaches the delivery slip 14 created by the creation terminal 50 to the luggage 15.

Next, when the user 11 carries out the delivery procedure (collection procedure) at the delivery destination 17, the server 20 first selects the luggage identification information associated with the biometric information (second biometric information) of the user 11 acquired at the delivery destination 17, using the biometric information. Next, the server 20 creates the output information for outputting the selected luggage identification information to the output terminal 60.

Thereafter, the staff member at the delivery destination 17 compares the luggage identification information output from the output terminal 60 with the content of the delivery slip 14 attached to the luggage 15, selects the luggage 15 to be handed to the user 11, and hands the selected luggage 15 to the user 11.

In this manner, in the present example embodiment, when the user 11 visits the delivery source 16 to drop off the luggage 15, the personal identification information and the luggage identification information are associated with each other through biometric authentication, thus cutting down the trouble of identification, signing, and the like at the window of the delivery source 16 as is conventional. Accordingly, convenience of the delivery service to the user 11 is improved.

Also, in the present example embodiment, when the user 11 visits the delivery destination 17 and collects the luggage 15, since the luggage identification information associated with the personal identification information can be selected using biometric authentication, the trouble of carrying out identification, signing, and the like at the window of the delivery source is cut down. Accordingly, convenience of the delivery service to the user 11 is improved.

Further, in the present example embodiment, the delivery service can be used not only when articles are purchased at retail stores as in Patent Document 1, but also for luggage and the like belonging to the user 11 since before departure, and thus convenience of the delivery service to the user 11 is improved.

Further, conventionally, when the business type of the delivery source is different from that of the delivery destination, it is difficult to link software having different specifications (e.g. software with different accounts). However, in the present example embodiment, since the server 20 (e.g., an information processing device such as a cloud server) carries out biometric authentication, management of the luggage 15, creation of the delivery slip information, and creation of the output information using one type of personal identification information, the trouble of linking such types of software can be cut down. For this reason, the system can be introduced more easily than conventional systems.

Also, in travel, business trips, and the like, there are cases in which the luggage 15 is to be delivered to a plurality of delivery destinations 17 a plurality of times according to the schedule of the user 11. Even in such cases, if the luggage management system of the present example embodiment is used, the luggage 15 can be delivered a plurality of times, and thus convenience of the delivery service to the user 11 is further improved.

### [Server configuration]

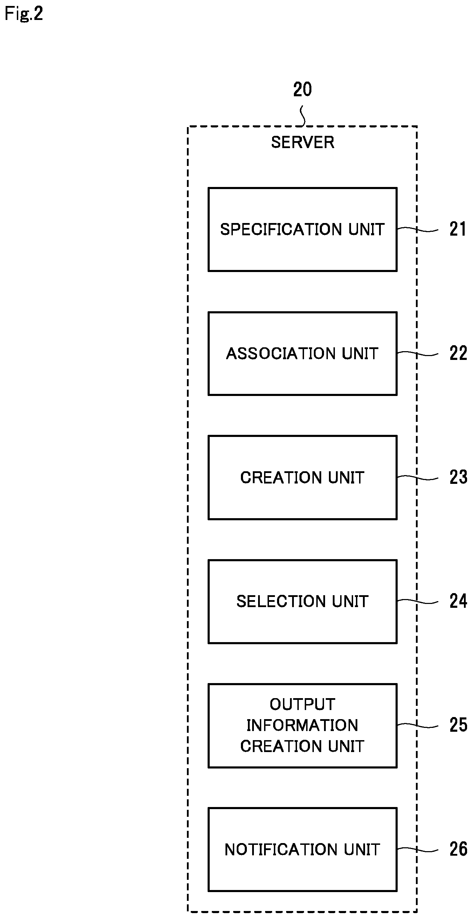

Next, the configuration of the server 20 of the present example embodiment will be described in more detail using FIG. 2. FIG. 2 is a diagram for illustrating an example of the server. As shown in FIG. 2, the server 20 of the present example embodiment includes a specification unit 21, an association unit 22, a creation unit 23, a selection unit 24, an output information creation unit 25, and a notification unit 26.

The specification unit 21 uses the biometric information acquired from the delivery source terminal 30 to specify the personal identification information associated with the biometric information. Note that the user may be specified using a terminal or the like belonging to the user. In such a case, the biometric information may be acquired and authenticated using a terminal of the user, and a QR code (registered trademark) may be output as the personal identification information.

Specifically, first, the specification unit 21 acquires the biometric information of the user 11 from the delivery source terminal 30. Next, the specification unit 21 references the registered information that is registered in advance, using the acquired biometric information, and specifies biometric information that is similar to the acquired biometric information.

Next, the specification unit 21 references the registered information that has been registered in advance, using the acquired biometric information, and specifies the personal identification information associated with the biometric information. Next, the specification unit 21 outputs the personal identification information to the association unit 22.

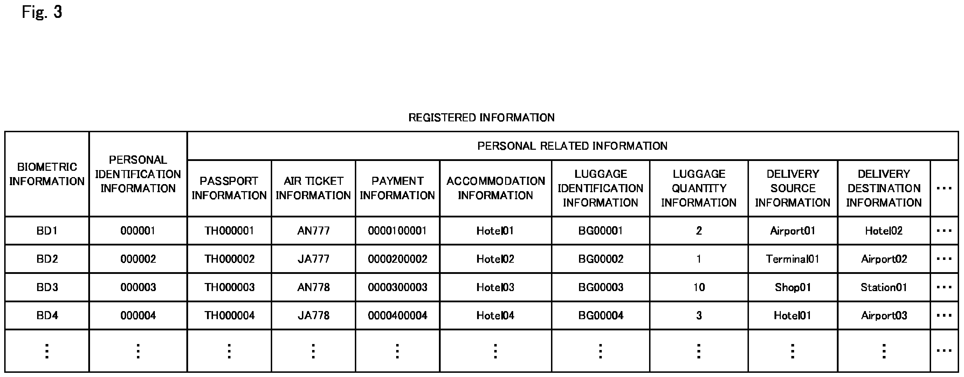

FIG. 3 is a diagram for illustrating an example of a data structure of the registered information. The registered information shown in FIG. 3 includes the biometric information, the personal identification information, and personal related information, for each user, in association with each other. "BD1" to "BD4" ... under in "biometric information" in FIG. 3 indicate biometric information that has been registered by the user in advance. "000001" to "000004" ... under "personal identification information" is information for identifying the user 11, and is associated with the biometric information.

Information under "personal related information" is information relating to the user. For example, as shown in FIG. 3, passport information, air ticket information, payment information, accommodation information, luggage identification information, luggage quantity information, delivery source information, delivery destination information, and the like, of the user, are registered in association with the personal identification information. Note that the information is not limited to the above information.

Information regarding the passport owned by the user is registered as "passport information" shown in FIG. 3. Information regarding the air ticket owned by the user (e.g., information indicating the name of the airport, terminal number, boarding gate, boarding flight, boarding date and time, air carrier, etc.) is registered as "air ticket information". Information regarding payment by the user (e.g., information indicating the credit card number, account number, 2D barcode payment identification number, electric money identification number, etc.) is registered as "payment information". Information regarding the accommodation of the user (e.g., information indicating the accommodation facility, date and time of check-in, accommodation length) is registered as "accommodation information".

Information for identifying the luggage owned by the user is registered as "luggage identification information". Information indicating the quantity of the luggage owned by the user is registered as "luggage quantity information". Information regarding the delivery source used by the user is registered as "delivery source information". Information regarding the delivery destination used by the user is registered as "delivery destination information".

Note that the biometric information of the registered information that has been registered in advance may be replaced with newly acquired biometric information. Alternatively, newly acquired biometric information may be added to the registered information that has been registered in advance. By doing so, since comparison with the new biometric information can be performed at the delivery destination, accuracy of authentication can be further improved.

Further, when payment is made using biometric authentication (face authentication). is carried out at a retail store, the person may be specified using the biometric information used to make the payment.

Further, when the luggage 15 is to be delivered from an airport (departure place) to a hotel (destination), for example, the person may also be specified by acquiring the face image of the user 11 captured at the immigration gate, and using the acquired face image or the feature amount of the face image as the biometric information.

Further, when biometric authentication (face authentication, etc.) is used at the time of check-in and check-out at the hotel, face authentication is performed at the time of check-in, and if the face authentication is successful and the luggage 15 is confirmed as belonging to the user 11, the luggage 15 may be handed over to the user 11. Further, at the time of check-out at the hotel, if the luggage 15 is to be delivered from the hotel to an airport or another place, the delivery procedure of the luggage 15 may also be accepted at the same time.

The association unit 22 associates the luggage identification information and the delivery destination information with the specified personal identification information. Specifically, the association unit 22 acquires the personal identification information corresponding to the user 11 from the specification unit 21. Further, the association unit 22 acquires the luggage identification information associated with the luggage 15, and the delivery destination information indicating the delivery destination 17 of the luggage 15. Consequently, the association unit 22 associates the personal identification information, the luggage identification information, and the delivery destination information with each other.

The creation unit 23 creates the delivery slip information used for creating the delivery slip 14, based on the luggage identification information and the delivery destination information. Specifically, once the personal identification information has been associated with the luggage identification information and the delivery destination information, the creation unit 23 creates the delivery slip information using the luggage identification information and the delivery destination information. Next, the creation unit 23 transmits the delivery slip information to the creation terminal 50 via the delivery source terminal 30. Alternatively, the creation unit 23 directly transmits the delivery slip information to the creation terminal 50.

Note that the association unit 22 or the creation unit 23 may also create the delivery destination information using information indicating the destination 13 of the user 11 and information indicating the date and time of arrival of the user 11 at the destination 13.

For example, in the case where the destination 13 of the user 11 is an airport, the association unit 22 or the creation unit 23 specifies a delivery destination close to the boarding gate at the airport (information indicating the destination) using the air ticket information, and sets the specified delivery destination as the delivery destination 17 of the luggage 15. Further, the association unit 22 or the creation unit 23 calculates the date and time when the luggage is to be delivered to the delivery destination 17 using the boarding date and time (information indicating the date and time of arrival at the destination), and sets the date and time as the date and time of arrival of the luggage 15 at the delivery destination 17.

For example, in the case where the destination 13 of the user 11 is a hotel, the association unit 22 or the creation unit 23 specifies the hotel (information indicating the destination) or a delivery destination near the hotel, and sets the specified delivery destination as the delivery destination 17 of the luggage 15. Further, the association unit 22 or the creation unit 23 calculates the date and time of arrival of the luggage 15 at the delivery destination 17 using the check-in date and time (information indicating the date and time of arrival of the user at the destination) and sets the calculated date and time as the date and time of arrival of the luggage 15 at the delivery destination 17.

The selection unit 24 selects the luggage identification information associated with the biometric information using the biometric information acquired from the delivery destination terminal 40. Specifically, first, the selection unit 24 acquires the biometric information of the user 11 from the delivery destination terminal 40. Next, the selection unit 24 references the registered information registered in advance using the acquired biometric information, and specifies the biometric information that is similar to the acquired biometric information.

Next, the selection unit 24 references the registered information registered in advance using the specified biometric information, and specifies the personal identification information associated with the biometric information. Next, the specification unit 21 outputs the personal identification information to the output information creation unit 25.

The output information creation unit 25 creates the output information for outputting the selected luggage identification information to the output terminal 60. Specifically, once the personal identification information has been selected, the output information creation unit 25 converts the luggage identification information and the delivery destination information into a format that can be output to the output terminal 60, and creates the output information. Next, the output information creation unit 25 transmits the output information to the output terminal 60 via the delivery destination terminal 40. Alternatively, the output information creation unit 25 directly transmits the output information to the output terminal 60.

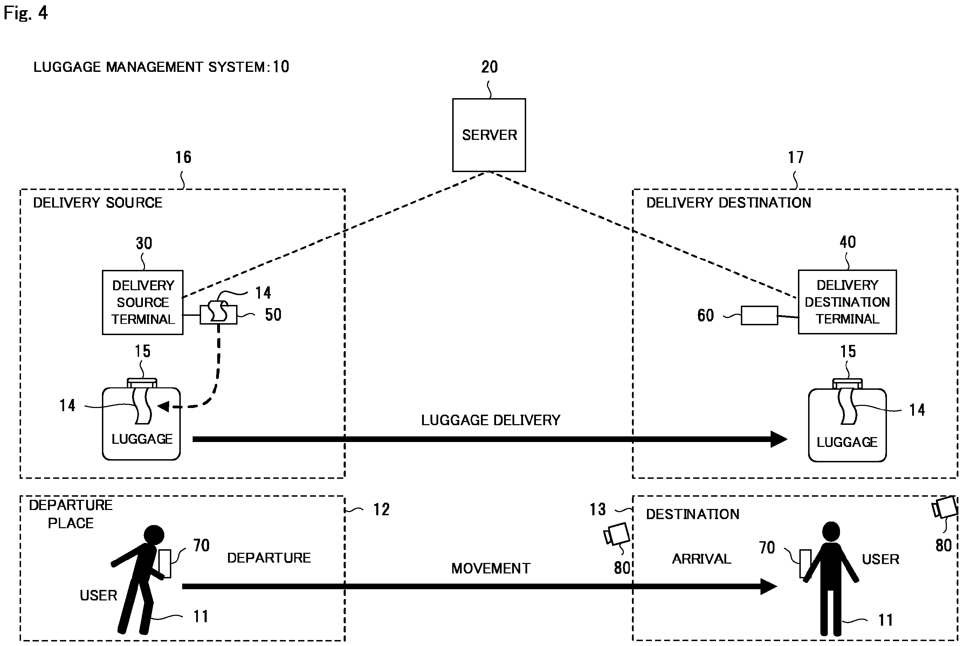

As shown in FIG. 4, when the arrival of the user 11 at the destination 13 (move destination) is detected using the biometric information of the user 11, the notification unit 26 makes a notification to a terminal 70 of the user 11 of the fact that the luggage 15 has been delivered to the delivery destination 17.

FIG. 4 is a diagram for illustrating an example of the luggage management system. Whether or not the user 11 has arrived at the destination 13 is detected by detecting whether or not the user 11 has arrived at the delivery destination 17, using the biometric information of the user acquired by image capture devices 80 (cameras) installed at a facility of the destination 13, on the route along which the user 11 moves to the destination 13, in a moving vehicle used by the user 11 to move (e.g., a vehicle such as an aircraft, a train, and an automobile), or the like.

For example, when the arrival of the user 11 at the airport is detected, the notification unit 26 makes a notification to the terminal 70 of the user 11 of the fact that the luggage 15 has been delivered to the delivery destination 17. "The arrival of the user 11 at the airport" includes the arrival of the user 11 at a station near the airport, the arrival of the user 11 at a taxi stand near the airport, and the like, for example.

Also, when the arrival of the user 11 at the hotel is detected, the notification unit 26 makes a notification to the terminal 70 of the user 11 of the fact that the luggage 15 has been delivered to the delivery destination 17. "The arrival of the user 11 at the hotel" includes the arrival of the user 11 at a station near the hotel, the arrival of the user 11 at a taxi stand near the hotel, and the like, for example.

Further, when it is detected that the user 11 on a train or in a taxi has reached the destination 13 (e.g., the location of the airport, the hotel, or the like) or entered or passed through an area that is set in advance based on the location of the delivery destination 17, using the biometric information of the user 11 transmitted from the image capture device 80 installed in the train or the taxi, the notification unit 26 makes a notification to the terminal 70 of the user 11 of the fact that the luggage 15 has been delivered to the delivery destination 17.

Further, in a state where the user 11 has not collected the luggage 15 at the destination 13, when it is detected that the user 11 has moved from the destination 13 using the biometric information of the user 11, the notification unit 26 makes a notification to the terminal 70 of the user 11 of the fact that the user 11 has not collected the luggage 15.

For example, in a state where the user 11 has not collected the luggage 15 at the airport, when it is detected that the user 11 has moved to baggage inspection, the notification unit 26 makes a notification to the terminal 70 of the user 11 of the fact that the user 11 has not collected the luggage 15. Alternatively, in the state where the user 11 has not collected the luggage 15 at the hotel, when it is detected that the user 11 has moved to his/her room after check-in, the system makes a notification to the terminal 70 of the user 11of the fact that the user 11 has not collected the luggage 15.

### [Apparatus Operations]

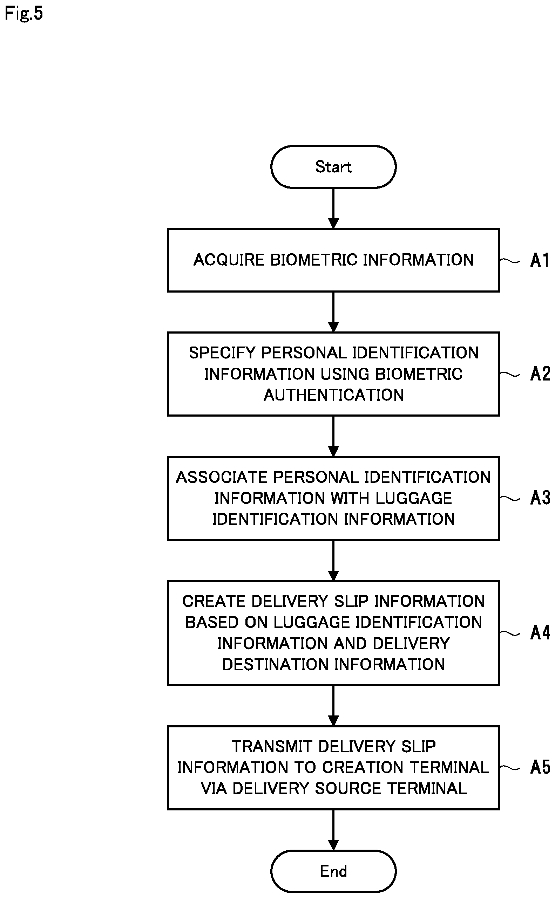

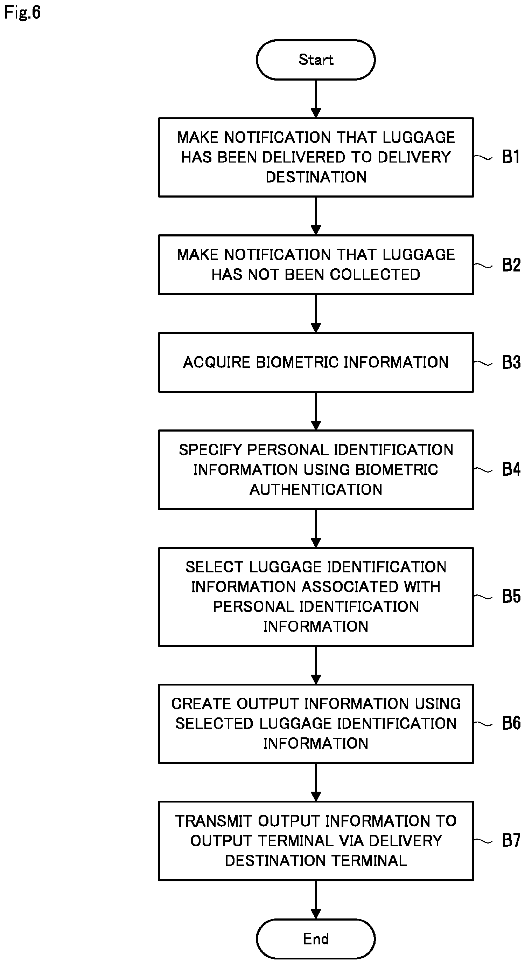

Next, the operations of the server of the luggage management system according to the example embodiment of the invention will be described using FIGS. 5 and 6. FIG. 5 is a diagram for illustrating an example of the operation of the server when luggage is dropped-off. FIG. 6 is a diagram for illustrating an example of the operation of the server when luggage is collected. In the following description, FIGS. 1 to 4 are referred to as appropriate. Also, in the present example embodiment, a luggage management method is implemented by operating the server. Therefore, the description of the luggage management method in the present example embodiment is replaced with the following operation description of the server of the luggage management system.

### The operations of the server when luggage is dropped-off will be described.

As shown in FIG. 5, first, the specification unit 21 acquires the biometric information from the delivery source terminal 30 (step A1). Next, the specification unit 21 specifies the personal identification information associated with the biometric information using the biometric information acquired from the delivery source terminal 30 (step A2).

Specifically, in step A2, first, the specification unit 21 acquires the biometric information of the user 11 from the delivery source terminal 30. Next, in step A2, the specification unit 21 references the registered information registered in advance, using the acquired biometric information, and specifies biometric information that is similar to the acquired biometric information.

Next, in step A2, the specification unit 21 references the registered information registered in advance, using the specified biometric information, and specifies the personal identification information associated with the biometric information. Next, in step A2, the specification unit 21 outputs the personal identification information to the association unit 22.

Next, the association unit 22 associates the specified personal identification information with the luggage identification information and the delivery destination information (step A3). Specifically, in step A3, the association unit 22 acquires the personal identification information corresponding to the user 11 from the specification unit 21. Further, the association unit 22 acquires the luggage identification information associated with the luggage 15 and the delivery destination information indicating the delivery destination 17 of the luggage 15, from the delivery source terminal 30. Next, in step A3, the association unit 22 associates the personal identification information, the luggage identification information, and the delivery destination information with each other.

The creation unit 23 creates the delivery slip information used for creating the delivery slip 14, based on the luggage identification information and the delivery destination information (step A4). Specifically, in step A4, once the luggage identification information and the delivery destination information have been associated with the personal identification information, the creation unit 23 creates the delivery slip information using the luggage identification information and the delivery destination information.

Note that the delivery destination information may be created by the association unit 22 or the creation unit 23 using information indicating the destination 13 of the user 11 and information indicating the date and time of the arrival of the user 11 at the destination 13.

Next, the creation 23 transmits the delivery slip information to the creation terminal 50 via the delivery source terminal 30 (step A5). Alternatively, the creation unit 23 directly transmits the delivery slip information to the creation terminal 50. Thereafter, a staff member at the delivery source 16 attaches the delivery slip 14 created by the creation terminal 50 to the luggage 15.

The operation of the server when the luggage is collected will be described.

As shown in FIG. 6, first, when the notification unit 26 detects the arrival of the user 11 at the destination 13 (movement destination), the notification unit 26 makes a notification to the terminal 70 of the user 11 of the fact that the luggage 15 has been delivered to the delivery destination 17 (step B1).

Next, if the notification unit 26 detects that the user 11 has moved from the destination 13 in a state where the user 11 has not collected the luggage 15 at the destination 13, the notification unit 26 makes a notification to the terminal 70 of the user 11 of the fact that the user 11 has not collected the luggage 15 (step B2).

Next, the selection unit 24 acquires the biometric information from the delivery destination terminal 40 (step B3). Next, the selection unit 24 specifies the personal identification information associated with the biometric information using the biometric information acquired from the delivery destination terminal 40 (step B4).

Next, the selection unit 24 selects the luggage identification information associated with the biometric information using the biometric information acquired from the delivery destination terminal 40 (step B5). Specifically, in step B5, the selection unit 24 references the registered information registered in advance, using the specified biometric information, and specifies the personal identification information associated with that biometric information. Next, in step B5, the specification unit 21 outputs the personal identification information to the output information creation unit 25.

Next, the output information creation unit 25 creates the output information for outputting the selected luggage identification information to the output terminal 60 (step B6). Specifically, in step B6, after the personal identification information is selected, the output information creation unit 25 converts the luggage identification information and the delivery destination information into a format that can be output to the output terminal 60, and creates the output information.

Next, the output information creation unit 25 transmits the output information to the output terminal 60 via the delivery destination terminal 40 (step B7). Alternatively, the output information creation unit 25 directly transmits the output information to the output terminal 60. Thereafter, a staff member at the delivery destination 17 compares the luggage identification information output from the output terminal 60 with the content of the delivery slip 14 attached to the luggage 15, selects the luggage 15 to be handed to the user 11, and hands the selected luggage 15 to the user 11.

### [Effects of example embodiment]

As described above, according to the present example embodiment, when the user 11 visits the delivery source 16 and drops off the luggage 15, since the personal identification information and the luggage identification information are associated with each other through biometric authentication, identification, signing, and the like at the window of the delivery source 16 as conventional can be saved. Accordingly, convenience of the delivery service to the user 11 is improved.

Also, in the present example embodiment, when the user 11 visits the delivery destination 17 and collects the luggage 15, since the luggage identification information associated with the personal identification information can be selected according to the biometric authentication, the trouble of identification, signing, and the like at the window of the delivery source can be cut down. Accordingly, convenience of the delivery service for the user 11 is improved.

Also, in the present embodiment, the delivery service can be used not only in the case where the user 11 purchases articles at retail stores as in Patent Document 1, but also for the luggage belonging to the user 11 since before departure, and thus convenience of the delivery service for the user 11 is improved.

Also, conventionally, if the business type of the delivery source is different from that of the delivery destination, it is difficult to link software of different specifications (e.g., software with different accounts). However, in the present example embodiment, since the server 20 (e.g., an information processing apparatus such as a cloud server) performs the biometric authentication, and management of the luggage 15, creation of the delivery slip information, and creation of the output information, using one piece of personal identification information, there is no need to link software, and thus the system can be more easily introduced compared to conventional systems.

Also, in travel or a business trip, there are cases in which the luggage 15 is to be delivered a plurality of times according to the schedule of the user 11. In the present example embodiment, since the delivery source 16 and the delivery destination 17 can be modified, the luggage 15 can be delivered a plurality of times. Accordingly, convenience of the delivery service to the user 11 is further improved.

### [Program]

A program according to the example embodiment of the invention need only be a program that causes a computer to execute steps A1 to A5 shown in FIG. 5 and steps B1 to B7 shown in FIG. 6. The server of the luggage management system and the luggage management method according to the present example embodiment can be realized by this program being installed in a computer and executed. In this case, the processor of the computer functions as the specification unit 21, the association unit 22, the creation unit 23, the selection unit 24, the output information creation unit 25, and the notification unit 26.

Also, the program of the present embodiment may also be executed by the computer system constituted by a plurality of computers. In this case, each computer may function as any one of the specification unit 21, the association unit 22, the creation unit 23, the selection unit 24, the output information creation unit 25, and the notification unit 26.

### [Physical configuration]

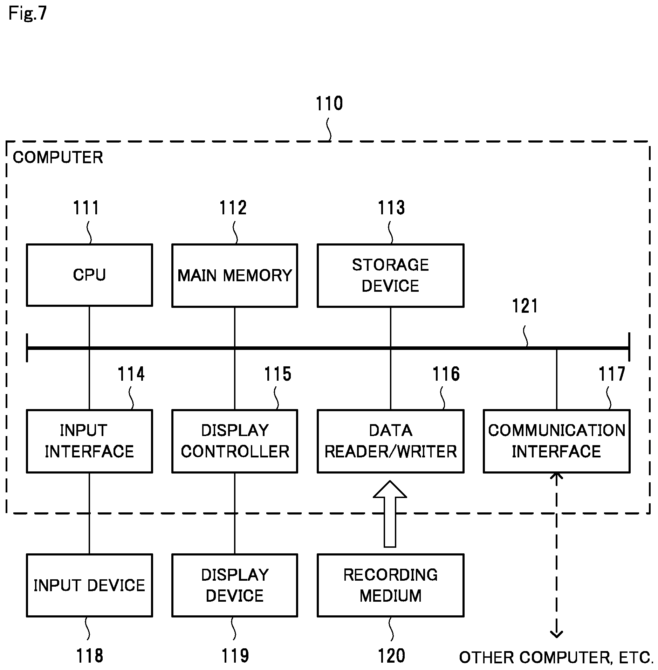

Here, a computer that realizes the server of the luggage management system by executing the program in the example embodiment will be described with reference to FIG. 7. FIG. 7 is a block diagram showing an example of a computer that realizes the luggage management system according to the example embodiment of the present invention.

As shown in FIG. 7, the computer 110 includes a CPU (Central Processing Unit) 111, a main memory 112, a storage device 113, an input interface 114, a display controller 115, a data reader/writer 116, and a communication interface 117. These units are connected to each other via a bus 121 so as to be capable of data communication. Note that the computer 110 may include a GPU (Graphics Processing Unit) or an FPGA (Field-Programmable Gate Array), in addition to the CPU 111 or instead of the CPU 111.

The CPU 111 loads the program (codes) according to the present example embodiment that is stored in the storage device 113 to the main memory 112 and executes the program in a predetermined order, thereby performing various kinds of computation. The main memory 112 is typically a volatile storage device such as a DRAM (Dynamic Random Access Memory). The program according to the example embodiment is provided stored in a computer-readable recording medium 120. Note that the program according to the example embodiment may also be distributed on the Internet to which the computer is connected via the communication interface 117. Note that, the recording medium 120 is a non-volatile recording medium.

Specific examples of the storage device 113 may include a hard disk drive, a semiconductor storage device such as a flash memory, and the like. The input interface 114 mediates data transmission between the CPU 111 and input devices 118 such as a keyboard and a mouse. The display controller 115 is connected to a display device 119 and controls display of the display device 119.

The data reader/writer 116 mediates data transmission between the CPU 111 and the recording medium 120, reads out the program from the recording medium 120, and writes, in the recording medium 120, the results of processing performed by the computer 110. The communication interface 117 mediates data transmission between the CPU 111 and other computers.

Specific examples of the recording medium 120 may include a general-purpose semiconductor storage device such as a CF (Compact Flash (registered trademark)) or an SD (Secure Digital), a magnetic recording medium such as a Flexible Disk, and an optical recording medium such as a CD-ROM (Compact Disk Read Only Memory).

Note that the server 20 of the present example embodiment may also be realized by using hardware corresponding to each of the units instead of a computer in which a program is installed. Furthermore, a portion of the server 20 may be realized by using a program, and the remaining portion may be realized by using hardware.

### [Supplementary note]

In relation to the above example embodiment, the following supplementary notes are further disclosed. The example embodiments described above can be partially or wholly realized by supplementary notes 1 to 20 described below, although the invention is not limited to the following description.

### (Supplementary note 1)

A luggage management system including:
a delivery source terminal provided at a delivery source;
a creation terminal configured to create a delivery slip to be attached to luggage;
a delivery destination terminal provided at a delivery destination of which the business type is different from that of the delivery source;
an output terminal configured to output output information; and
a computer configured to manage the luggage,
wherein the computer includes:
   a specification unit configured to specify personal identification information to identify a user associated with first biometric information by using the first biometric information that is acquired;
   an association unit configured to associate the specified personal identification information with luggage identification information of the luggage and delivery destination information indicating the delivery destination;
   a creation unit configured to create delivery slip information that is to be used by a creation terminal to create the delivery slip, based on the luggage identification information and the delivery destination information;
   a selection unit configured to select the luggage identification information associated with second biometric information by using the second biometric information that is acquired; and
   an output information creation unit configured to create output information for outputting the selected luggage identification information to the output terminal.

### (Supplementary note 2)

The luggage management system according to supplementary note 1,
wherein the delivery destination information includes information indicating the destination of the user and information indicating the date and time when the user is to arrive at the destination.

### (Supplementary note 3)

The luggage management system according to supplementary note 1 or 2, further including:
a notification unit configured to, when it is detected that the user has arrived at the destination, make a notification to a terminal of the user that the luggage has been delivered to the delivery destination.

### (Supplementary note 4)

The luggage management system according to supplementary note 3,
wherein, when it is detected that the user has moved from the destination in a state where the user has not collected the luggage, the notification unit makes a notification to the terminal of the user that the user has not collected the luggage.

### (Supplementary note 5)

A luggage management method, including:
specifying personal identification information for identifying a user associated with first biometric information by using the first biometric information that is acquired;
associating the specified personal identification information with luggage identification information of the luggage and delivery destination information indicating the delivery destination of which the business type is different from that of a delivery source;
creating delivery slip information that is to be used by a creation terminal to create a delivery slip that is to be attached to the luggage, based on the luggage identification information and the delivery destination information;
selecting the luggage identification information associated with second biometric information by using the second biometric information that is acquired; and
creating output information for outputting the selected luggage identification information to an output terminal.

### (Supplementary note 6)

The luggage management method according to supplementary note 5,
wherein the delivery destination information includes information indicating a destination of the user and information indicating the date and time when the user is to arrive at the destination.

### (Supplementary note 7)

The luggage management method according to supplementary note 5 or 6,
wherein, when the arrival of the user at the destination is detected, a notification is made to a terminal of the user of the fact that the luggage has been delivered to the delivery destination.

### (Supplementary note 8)

The luggage management method according to supplementary note 7,
wherein, when it is detected that the user has moved from the destination in a state where the user has not collected the luggage, the terminal of the user is notified of the fact that the luggage has not been collected.

### (Supplementary note 9)

A luggage management apparatus, including:
a specification unit configured to specify personal identification information for identifying a user associated with first biometric information by using the first biometric information that is acquired;
an association unit configured to associate the specified personal identification information with luggage identification information of luggage and delivery destination information indicating a delivery destination of which the business type is different from that of a delivery source;
a creation unit configured to create delivery slip information that is to be used by a creation terminal to create a delivery slip that is to be attached to the luggage, based on the luggage identification information and the delivery destination information;
a selection unit configured to select the luggage identification information associated with second biometric information by using the second biometric information that is acquired; and
an output information creation unit configured to create output information for outputting the selected luggage identification information to an output terminal.

### (Supplementary note 10)

The luggage management apparatus according to supplementary note 9,
wherein the delivery destination information includes information indicating a destination of the user and information indicating the date and time when the user is to arrive at the destination.

### (Supplementary note 11)

A luggage management apparatus according to supplementary note 9 or 10, further including
a notification unit configured to, when arrival of the user at the destination is detected, make a notification to the terminal of the user that the luggage has arrived at the delivery destination.

### (Supplementary note 12)

A luggage management apparatus according to supplementary note 11,
wherein, when it is detected that the user has moved from the destination in a state where the user has not collected the luggage, the notification unit makes a notification to the terminal of the user of the fact that the luggage has not been collected.

### (Supplementary note 13)

A computer readable recording medium that includes a program recorded thereon, the program including instructions that cause a computer to carry out:
specifying personal identification information for identifying a user associated with first biometric information by using the first biometric information that is acquired;
associating the specified personal identification information with luggage identification information of the luggage and delivery destination information indicating the delivery destination of which the business type is different from that of a delivery source;
creating delivery slip information that is to be used by a creation terminal to create a delivery slip that is to be attached to the luggage, based on the luggage identification information and the delivery destination information;
selecting the luggage identification information associated with second biometric information by using the second biometric information that is acquired; and
creating output information for outputting the selected luggage identification information to an output terminal.

### (Supplementary note 14)

The computer-readable recording medium according to supplementary note 13,
wherein, in the computer, the delivery destination information includes information indicating a destination of the user and the date and time when the user is to arrive at the destination.

### (Supplementary note 15)

The computer-readable recording medium according to supplementary note 13 or 14, the program including instructions that cause a computer to carry out:
when it is detected that the user has arrived at the destination, making a notification to the terminal of the user of the fact that the luggage has been delivered to the delivery destination.

### (Supplementary note 16)

The computer-readable recording medium according to supplementary note 15, the program including instructions that cause a computer to carry out:
when it is detected that the user has moved from the destination in a state where the user has not collected the luggage at the destination, making a notification to the terminal of the user of the fact that the luggage has not been collected by the notification means.

### (Supplementary note 17)

A luggage management system including:
a specification unit configured to specify personal identification information for identifying a user associated with first biometric information by using the first biometric information that is acquired at a delivery source;
an association unit configured to associate the specified personal identification information with luggage identification information of luggage and delivery destination information indicating a delivery destination;
a creation unit configured to create delivery slip information for creating a delivery slip based on the luggage identification information and the delivery destination information;
a selection unit configured to select the luggage identification information associated with second biometric information by using the second biometric information acquired at a delivery destination; and
an output information creation unit configured to create output information for outputting the selected luggage identification information to an output terminal.

### (Supplementary note 18)

The luggage management system according to supplementary note 17,
wherein the delivery destination information includes information indicating a destination of the user and information indicating the date and time when the user is to arrive at the destination.

### (Supplementary note 19)

The luggage management system according to supplementary note 17 or 18, including
a notification unit configured to, when the arrival of the user at the destination is detected, make a notification to the terminal of the user of the fact that the luggage has been delivered to the delivery destination.

### (Supplementary note 20)

The luggage management system according to supplementary note 19,
wherein, when it is detected that the user has moved from the destination in a state where the user has not collected the luggage, the notification unit makes a notification to the terminal of the user of the fact that the luggage has not been collected.

The invention of the present application has been described above with reference to the present example embodiment, but the invention of the present application is not limited to the above example embodiment. The configurations and the details of the invention of the present application may be changed in various manners that can be understood by a person skilled in the art within the scope of the invention of the present application.

### INDUSTRIAL APPLICABILITY

As described above, according to the invention, convenience of the delivery service to the user is improved. The invention is usable in a delivery service field.

### LIST OF REFERENCE SIGNS

- 10: Luggage management system
- 11: User
- 12: Departure place
- 13: Destination
- 14: Delivery slip
- 15: Luggage
- 16: Delivery source
- 17: Delivery destination
- 20: Server (luggage management apparatus
- 21: Specification unit
- 22: Association unit
- 23: Creation unit
- 24: Selection unit
- 25: Output information creation unit
- 26: Notification unit
- 30: Delivery source terminal
- 40: Delivery destination terminal
- 50: Creation terminal
- 60: Output terminal
- 70: Terminal
- 80: Image capture apparatus
- 110: Computer
- 111: CPU
- 112: Main memory
- 113: Storage device
- 114: Input interface
- 115: Display controller
- 116: Data reader/writer
- 117: Communication interface
- 118: Input device
- 119: Display device
- 120: Storage medium
- 121: Bus

## Claims

1. A luggage management system comprising:
a delivery source terminal provided at a delivery source;
a creation terminal configured to create a delivery slip to be attached to luggage;
a delivery destination terminal provided at a delivery destination of which the business type is different from that of the delivery source;
an output terminal configured to output output information; and
a computer configured to manage the luggage,
wherein the computer includes:
a specification means for specifying personal identification information to identify a user associated with first biometric information by using the first biometric information that is acquired;
an association means for associating the specified personal identification information with luggage identification information of the luggage and delivery destination information indicating the delivery destination;
a creation means for creating delivery slip information that is to be used by a creation terminal to create the delivery slip, based on the luggage identification information and the delivery destination information;
a selection means for selecting the luggage identification information associated with second biometric information by using the second biometric information that is acquired; and
an output information creation means for creating output information for outputting the selected luggage identification information to the output terminal.

2. The luggage management system according to claim 1,
wherein the delivery destination information includes information indicating the destination of the user and information indicating the date and time when the user is to arrive at the destination.

3. The luggage management system according to claim 1 or 2, further comprising:
a notification means for, when it is detected that the user has arrived at the destination, making a notification to a terminal of the user that the luggage has been delivered to the delivery destination.

4. The luggage management system according to claim 3,
wherein, when it is detected that the user has moved from the destination in a state where the user has not collected the luggage, the notification means makes a notification to the terminal of the user that the user has not collected the luggage.

5. A luggage management method, comprising:
specifying personal identification information for identifying a user associated with first biometric information by using the first biometric information that is acquired;
associating the specified personal identification information with luggage identification information of the luggage and delivery destination information indicating the delivery destination of which the business type is different from that of a delivery source;
creating delivery slip information that is to be used by a creation terminal to create a delivery slip that is to be attached to the luggage, based on the luggage identification information and the delivery destination information;
selecting the luggage identification information associated with second biometric information by using the second biometric information that is acquired; and
creating output information for outputting the selected luggage identification information to an output terminal.

6. A luggage management apparatus, comprising:
a specification means for specifying personal identification information for identifying a user associated with first biometric information by using the first biometric information that is acquired;
an association means for associating the specified personal identification information with luggage identification information of luggage and delivery destination information indicating a delivery destination of which the business type is different from that of a delivery source;
a creation means for creating delivery slip information that is to be used by a creation terminal to create a delivery slip that is to be attached to the luggage, based on the luggage identification information and the delivery destination information;
a selection means for selecting the luggage identification information associated with second biometric information by using the second biometric information that is acquired; and
an output information creation means for creating output information for outputting the selected luggage identification information to an output terminal.

7. A computer readable recording medium that includes a program recorded thereon, the program including instructions that cause a computer to carry out:
specifying personal identification information for identifying a user associated with first biometric information by using the first biometric information that is acquired;
associating the specified personal identification information with luggage identification information of the luggage and delivery destination information indicating the delivery destination of which the business type is different from that of a delivery source;
creating delivery slip information that is to be used by a creation terminal to create a delivery slip that is to be attached to the luggage, based on the luggage identification information and the delivery destination information;
selecting the luggage identification information associated with second biometric information by using the second biometric information that is acquired; and
creating output information for outputting the selected luggage identification information to an output terminal.

8. A luggage management system comprising:
a specification means for specifying personal identification information for identifying a user associated with first biometric information by using the first biometric information that is acquired at a delivery source;
an association means for associating the specified personal identification information with luggage identification information of luggage and delivery destination information indicating a delivery destination;
a creation means for creating delivery slip information for creating a delivery slip based on the luggage identification information and the delivery destination information;
a selection means for selecting the luggage identification information associated with second biometric information by using the second biometric information acquired at a delivery destination; and
an output information creation means for creating output information for outputting the selected luggage identification information to an output terminal.
